# EUROPEAN PATENT APPLICATION

(11) **EP 2 891 407 A1**
(43) Date of publication of application: **08.07.2015**
(21) Application number: 14200620.4
(22) Date of filing: 30.12.2014
(51) Int. Cl.: A23P 1/08, A47J 43/20, A23L 1/00

(54) **Food wrapping and rolling device**

(30) Priority: 01.01.2014 US 201414145953
(71) Applicant: Thai, Cang, Vienna, VA 22180 (US)
(72) Inventor: Thai, Cang, Vienna, VA 22180 (US)
(74) Representative: Klinski, Robert

(57) **Abstract**

A food wrapping and rolling device (10) that includes a tray (12) having a first end (12a) and a second end (12b) and a receptacle (13) having a bin (14) and a cover (16). The cover (16) is movable between an open position and a closed position.

## Description

### FIELD OF THE INVENTION

The present teachings relate to a food wrapping and rolling device. In particular, the present teachings relate to a device that enables a user to make a large number of wrapped foods in a short period of time.

### BACKGROUND OF THE INVENTION

Many types of foods, such as spring rolls, dim sum, burritos, and sushi rolls, to name a few, must be served fresh and be wrapped. Unfortunately, wrapping these types of foods can be time consuming, and as a result, more expensive to produce. Therefore, a small entity, such as a small catering business or a small restaurant, is unable to fulfill large orders of such foods.

Accordingly, a need exists in the industry for a portable wrapping and rolling device that allows a user of the device to make wrapped and rolled foods, such as spring rolls, in large quantities in a short period of time.

### SUMMARY OF THE INVENTION

The present teachings provide a food wrapping and rolling device including (i) a tray having a first end and a second end and (ii) a receptacle having a bin and a cover. The cover is movable between an open position and a closed position.

The present teachings further provide a food wrapping and rolling device that includes at least one leg mounted under the food wrapping and rolling device for supporting the food wrapping and rolling device on a surface.

The present teachings provide that the leg is positioned such that the distance between the surface and the first end of the tray is larger than the distance between the surface and the second end of the tray.

The present teachings further provide a food wrapping and rolling device that includes a second leg mounted under the food wrapping and rolling device for supporting the food wrapping and rolling device on a surface.

The present teachings provide that the second leg is shorter than the first leg.

The present teachings provide that the first leg is positioned in a proximity to the first end of the tray and the second leg is positioned in a proximity to the second end of the

The present teachings further provide a food wrapping and rolling device that includes a roller for rolling a wrapped food.

The present teachings provide that the roller includes a plate and a handle connected to the plate.

The present teachings provide that the plate includes a rough surface.

The present teachings provide that the rough surface includes at least one of ridges, valleys, and protrusions.

The present teachings further provide a food wrapping and rolling device that includes a handle connected to the cover for a user to move the cover from the open position to a closed position.

The present teachings provide that the cover and the bin are connected to each other by at least one of a hinge, a pliable material, and a spring.

The present teachings provide that the tray further includes at least one side flange mounted on each side of the tray and an end flange mounted on the second end of the

The present teachings provide a method for making a roll by placing the cover in the open position and placing a wrap in the food wrapping and rolling device such that the wrap covers at least a portion of the tray, the bin, and the cover.

The present teachings further provide a method for making a roll by placing food ingredients on the portion of the wrap that is placed over at least a portion of the bin.

The present teachings further provide a method for making a roll by closing the cover such that the portion of the wrap that is placed over at least a portion of the cover, covers at least a portion of the food ingredients.

The present teachings further provide a method for making a roll by opening the cover.

The present teachings further provide a method for making a roll by folding each end of the wrap covering the food ingredients.

The present teachings further provide a method for making a roll by rolling the at least partially covered food ingredients such that the portion of the wrap that is place to cover at least a portion of the tray is wrapped around the at least partially covered food ingredients.

The present teachings provide a method for making a roll wherein the wrap includes at least one of carbohydrates and fibers.

Additional features and advantages of various embodiments will be set forth, in part, in the description that follows, and will, in part, be apparent from the description, or may be learned by the practice of various embodiments. The objectives and other advantages of various embodiments will be realized and attained by means of the elements and combinations particularly pointed out in the description herein.

### BRIEF DESCRIPTION OF THE DRAWINGS

Fig. 1 is a perspective view of a food wrapping and rolling device with its cover in an open position, according to various embodiments;
Fig. 2 is a perspective view of a food wrapping and rolling device with its cover in a semi-open position, according to various embodiments;
Fig. 3 is a perspective view of a food wrapping and rolling device with its cover in a closed position, according to various embodiments;
Fig. 4 is a cross-sectional view of a food wrapping and rolling device with its cover in an open position and the wrap and the food ingredients placed thereon, according to various embodiments;
Fig. 5 is a cross-sectional view of a food wrapping and rolling device with its cover in a semi-open position and the wrap and the food ingredients placed thereon, according to various embodiments;
Fig. 6 is a cross-sectional view of a food wrapping and rolling device with its cover in a closed position and the wrap and the food ingredients placed thereon, according to various embodiments;
Fig. 7 is a cross-sectional view of a food wrapping and rolling device with its cover in an open position and the wrap forming an envelope around the food ingredients, according to various embodiments;
Fig. 8 is a cross-sectional view of a food wrapping and rolling device with a roller placed on the envelope containing the food ingredients, according to various embodiments;
Fig. 9 is a cross-sectional view of a food wrapping and rolling device with a roller, rolling the wrap, according to various embodiments; and
Fig. 10 is a cross-sectional view of a food wrapping and rolling device with a completed wrap according to various embodiments.

It is to be understood that both the foregoing general description and the following detailed description are exemplary and explanatory only, and are intended to provide an explanation of various embodiments of the present teachings.

### DETAILED DESCRIPTION OF THE PREFERRED EMBODIMENTS

The present teachings are directed to a food wrapping and rolling device. The device can include a tray having a first end and a second end. Additionally, the food wrapping and rolling device can include a receptacle having a bin and a cover. The cover can be movable between an open position and a closed position.

The present teachings are also directed to a food wrapping and rolling device that allows a user to produce a large number of food products, such as spring rolls, dim sum, burritos, and sushi, to name a few, in a short period of time, and thereby preventing the food from getting spoiled prior to consumption.

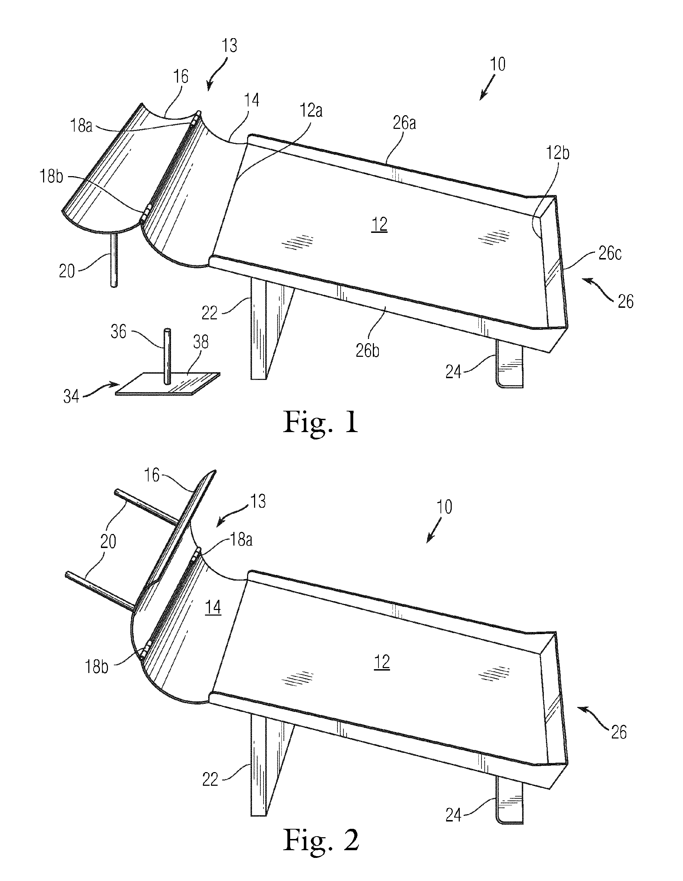

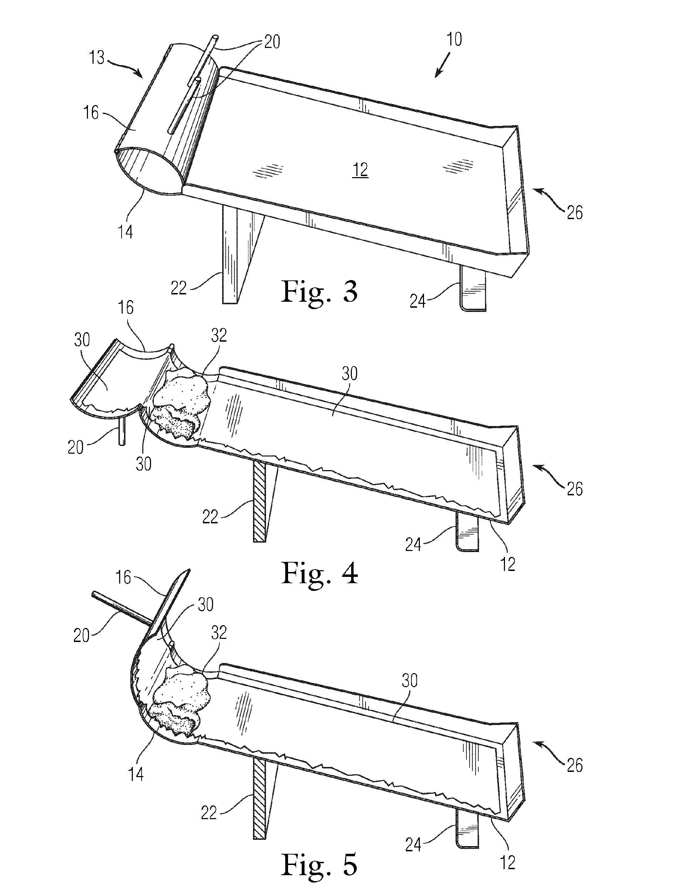

Figs. 1-3 are perspective views of an exemplary embodiment of the food wrapping and rolling device 10 of the present teachings. The food wrapping and rolling device 10 can include a tray 12 having a first end 12a and a second end 12b. The food wrapping and rolling device 10 of the present teachings can also include a receptacle 13. The receptacle 13 is preferably positioned and connected to the first end 12a of the tray 12, and can include a bin 14 and a cover 16. The cover 16 can be moved from an open position (shown in Fig. 1) to a closed position (shown in Fig. 3). In one example, the cover 16 can include at least one handle 20 so that a user can easily move the cover 16 from an open position to a closed position.

The cover 16 and the bin 14 can be connected to one another by a hinge, such as door-like hinges 18a and 18b. In one example, the hinge connecting the cover 16 to the bin 14 is one of a pliable material or a spring, to name a few. When the hinge is in a form of a spring, (e.g., a leaf spring), it is preferable that the spring keeps the cover 16 in an open position at its natural state.

In one exemplary embodiment of the present teachings, the food wrapping and rolling device 10 can include at least one leg 22 positioned under the tray 12. Preferably, the leg 22 is positioned such that when the food wrapping and rolling device 10 is placed on a flat horizontal surface, such as a kitchen counter, the first end 12a of the tray 12 is higher than the second end 12b of the tray 12. Accordingly, when the food wrapping and rolling device 10 is placed on the flat horizontal surface, the tray 12 will be at an angle relative to the flat horizontal surface. The angle of the tray 12 relative to the flat horizontal surface can be from about 1 degree to about 89 degrees, and preferably, from about 10 degrees to about 45 degrees. Alternatively, the food wrapping and rolling device 10 can include a second leg 24 positioned under the tray 12. In this alternative embodiment, the second leg 24 can be positioned such that when the food wrapping and rolling device 10 is placed on a flat horizontal surface, the first end 12a of the tray 12 is higher than the second end 12b of the tray 12. In one exemplary embodiment, the first leg 22 is longer than the second leg 24. In this exemplary embodiment, the longer first leg 22 can be positioned in the proximity of the first end 12a of the tray 12 and the shorter second leg 24 can be positioned in the proximity of the second end 12b of the tray 12.

The food wrapping and rolling device 10 can also include an optional flange 26. In one exemplary embodiment, the flange 26 can be mounted on each side of the tray 12, such as flanges 26a and 26b and/or at the second end 12b of the tray, such as flange 26c.

The food wrapping and rolling device 10 can optionally include a roller device 34. The roller device 34 can include a handle 36 connected to a surface of a plate 38. The handle 36 can be in a form of a knob, rod, or door or cabinet-like handle that is connected to a surface on the plate 38. The plate 38 can be smooth on both sides, can be rough on both or can include a smooth surface on one side and a rough surface on its opposite side. The device 34 can be used to roll an envelope containing the food ingredients 32 on the tray 12 having at least a portion of a wrap 30 (such as seaweed paper, rice paper, or tortilla). By the envelope using the roller device 34, the wrap 30 can surround the envelope without the actually touching the wrap or the envelope with his/her hands. In one exemplary embodiment, the surface of the plate 38 that comes in contact with the envelope containing the food ingredients 32 includes a design that prevents the plate 38 from slipping or sliding over the envelope containing the food ingredients 32. For example, the surface in contact with the envelope containing the food ingredients 32 can include a rough surface. The rough surface include at least one of ridges, valleys, and/or protrusions.

Additionally, the food wrapping and rolling device 10 can be made from any material, such as a metallic material, a wood-based material, or a polymer-based material. Preferably, the material used to manufacture each part of the food wrapping and rolling device 10 can easily be washed in a dishwasher and/or can easily be disinfected by regular household disinfectants.

Referring to Figs. 1 and 4, in use, the cover 16 is first placed in an open A wrap 30, which generally includes a carbohydrate and/or fiber, such as rice paper, tortilla, or seaweed paper, can be placed on the food wrapping and rolling device 10, such that the wrap covers at least a portion of the tray 12, the bin 14, and the cover 16. The food ingredients 32, such as (i) lettuce and shrimp for making spring rolls, (ii) rice, bean, vegetables, and meat for making burritos, and/or (iii) rice and fish for making sushi rolls, can be placed on a portion of the wrap 30 positioned on the bin 14 of the food wrapping and rolling device 10.

Referring to Figs. 2, 3, 5, and 6, using the handles 20, the user can then close the cover over the food ingredients 32, such that the portion of the wrap 30 positioned on the cover 16 can cover the top portion of the food ingredients 32. Any portion of the wrap 30 extending beyond the food ingredients 32 can then be folded inwardly to cover the openings on each end of the food ingredients 32. Accordingly, the combination of the wrap 30 positioned on the bin 14 and wrap 30 positioned on the top portion of the food ingredients 32 now form an envelope around the food ingredients 32.

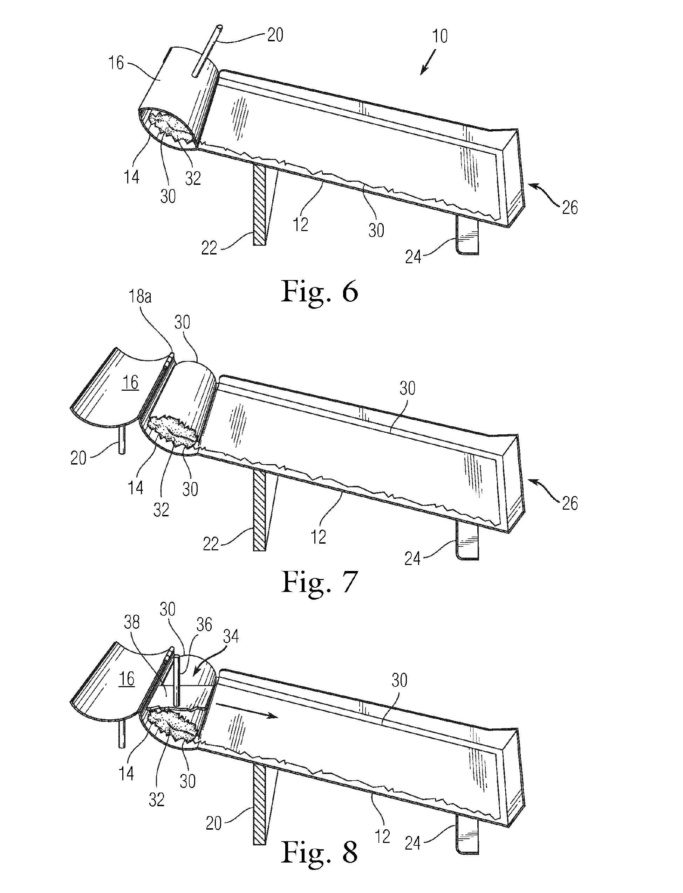

Referring to Fig. 7, the cover 16 can then be placed in an open position, such that the portion of the wrap 30, which was originally placed over the cover 16, is now over the food ingredients 32. The roller 34 can then be placed over the envelope containing the food ingredients 32, as shown in Fig. 8.

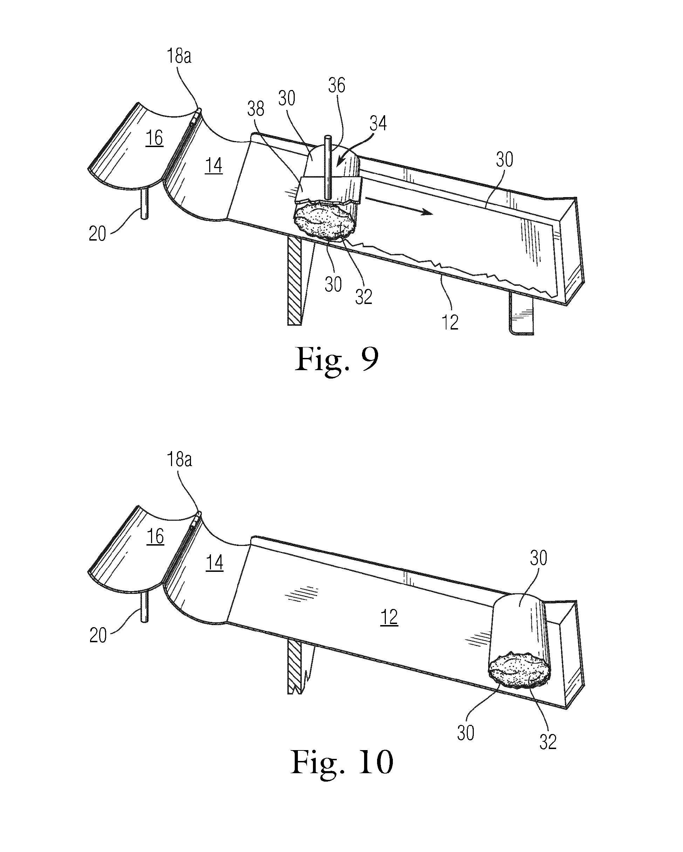

Referring to Fig. 9, once the roller 34 is placed over the envelope containing the food ingredients 32, the user can then pull the roller 34 towards the second end 12b of the tray 12, such that the remaining wrap 30, which was placed over the tray 12, is wrapped around the food ingredients 32. The final result is shown in Fig. 10, when the wrap 30 is completely rolled around the food ingredients 32 to create the desired product, such as a spring roll, dim sum, burrito, and/or sushi roll, to name a few.

From the foregoing description, those skilled in the art can appreciate that the present teachings can be implemented in a variety of forms. Therefore, while these teachings have been described in connection with particular embodiments and examples thereof, the scope of the present teachings should not be so limited. Various changes and modifications be made without departing from the scope of the teachings herein.

## Claims

1. A food wrapping and rolling device (10) comprising:
a tray (12) including a first end (12a) and a second end (12b); and
a receptacle (13) including a bin (14) and a cover (16), wherein the cover (16) is movable between an open position and a closed position

2. The food wrapping and rolling device (10) of claim 1 further comprising at least one leg (22) mounted under the food wrapping and rolling device (10) for supporting the food wrapping and rolling device (10) on a surface.

3. The food wrapping and rolling device (10) of claim 2, wherein the leg (22) is positioned such that the distance between the surface and the first end (12a) of the tray (12) is larger than the distance between the surface and the second end (12b) of the tray (12).

4. The food wrapping and rolling device (10) of claim 2, further comprising a second leg (24) mounted under the food wrapping and rolling device (10) for supporting the food wrapping and rolling device (10) on the surface.

5. The food wrapping and rolling device (10) of claim 4, wherein the second leg (24) is shorter than the first leg (22).

6. The food wrapping and rolling device (10) of claim 5, wherein the first leg (22) is positioned in a proximity to the first end (12a) of the tray (12) and the second leg (24) is positioned in a proximity to the second end (12b) of the tray (12).

7. The food wrapping and rolling device (10) of claim 1 further comprising a roller (34) for rolling a wrapped food.

8. The food wrapping and rolling device (10) of claim 7, wherein the roller (34) includes a plate (38) and a handle (36) connected to the plate (38).

9. The food wrapping and rolling device (10) of claim 1 further comprising a handle (20) connected to the cover (16) for a user to move the cover (16) from the open position to a closed position.

10. The food wrapping and rolling device (10) of claim 1, wherein the cover (16) and the bin (14) are connected to each other by a hinge (18a, 18b).

11. The food wrapping and rolling device (10) of claim 1, wherein the tray (12) further comprises at least one side flange (26a, 26b) mounted on each side of the tray (12) and an end flange (26c) mounted on the second end (12b) of the tray (12).

12. A method for wrapping and rolling food into a roll comprising the steps of:
placing the cover (16) of claim 1 in the open position, and
placing a wrap (30) in the food wrapping and rolling device (10) such that the wrap (30) covers at least a portion of the tray (12), the bin (14), and the cover (16).

13. The method of claim 12 further comprising the step of placing food ingredients (32) on the portion of the wrap (30) that is placed over at least a portion of the bin (14).

14. The method of claim 13 further comprises the step of closing the cover (16) such that the portion of the wrap (30) that is placed over at least a portion of the cover (16), covers at least a portion of the food ingredients (32).

15. The method of claim 14 further comprising the steps of (i) opening the cover (16); (ii) folding each end of the wrap (30) covering the food ingredients (32), and (iii) rolling the at least partially covered food ingredients (32) such that the portion of the wrap (30) that is place to cover at least a portion of the tray (12) is wrapped around the at least partially covered food ingredients (32).
